# EUROPÄISCHE PATENTSCHRIFT

(11) **EP 3 356 194 B1**
(45) Veröffentlichungstag und Bekanntmachung des Hinweises auf die Patenterteilung: **31.03.2021**
(21) Anmeldenummer: 16747489.9
(22) Anmeldetag: 01.08.2016
(51) Int. Cl.: B60T 17/04, F16K 1/12, F16K 1/14, F16K 1/38

(54) **VENTILEINRICHTUNG ZUR DROSSELUNG EINER DRUCKMITTELSTRÖMUNG, SOWIE DÄMPFUNGSEINRICHTUNG ZUR DÄMPFUNG VON DRUCKPULSATIONEN**
VALVE ARRANGEMENT FOR THROTTLING A PRESSURIZED FLUID FLOW, AND DAMPENING ARRANGEMENT FOR DAMPENING PRESSURE PULSES
ARRANGEMENT DE VANNE POUR RÉDUIRE UN COURANT DE FLUIDE PRESSURISÉ, ET ARRANGEMENT D'ÉTOUFFOIR POUR ÉTOUFFER PULSATIONS DE PRESSION

(30) Priorität: 28.09.2015 DE 102015218557
(43) Veröffentlichungstag der Anmeldung: 08.08.2018
(73) Patentinhaber: Robert Bosch GmbH, 70442 Stuttgart (DE)
(72) Erfinder: NORBERG, Jens, 70378 Stuttgart (DE); SCHELLNEGGER, Patrick, 71636 Ludwigsburg (DE); LECHLER, Andreas, 71696 Moeglingen (DE)
(86) Internationale Anmeldenummer: PCT/EP2016/068311
(87) Internationale Veröffentlichungsnummer: WO 2017/054961

(56) Entgegenhaltungen:
- WO-A1-91/04181
- DE-A1- 4 028 941
- DE-A1-102013 220 331

## Beschreibung

Die Erfindung betrifft eine Ventileinrichtung nach den Merkmalen des Oberbegriffs des Anspruchs 1 sowie eine Dämpfungseinrichtung nach den Merkmalen des Oberbegriffs des Anspruchs 6.

### Technischer Hintergrund:

Heutige schlupfregelbare Fahrzeugbremsanlagen bieten Zusatzfunktionen, die den Fahrer zum Beispiel bei der Einhaltung des Abstands zu einem vorausfahrenden Fahrzeug unterstützen. Dies geschieht durch ein aktives Eingreifen des Bremssystems, indem dieses einen Bremsdruck an den Radbremsen aufbaut, ohne dass der Fahrer selbst das Bremspedal betätigt. Damit der Fahrer dabei keine störenden Geräusche wahrnimmt, werden Dämpfungseinrichtungen eingesetzt, welche Druckpulsationen mindern, die von den Druckerzeugern des Bremssystems verursacht werden.

Diese Dämpfungseinrichtungen setzen sich aus einem hydraulischen Widerstand und einer hydraulischen Kapazität zusammen, welche stromaufwärts des hydraulischen Widerstands in den Hydraulikkreis geschalten ist. Für die Wirksamkeit der Dämpfungseinrichtung ist eine hohe Drosselwirkung des hydraulischen Widerstands notwendig. Allerdings hat ein hoher hydraulischer Widerstand den Nachteil, dass er einen großen Druckabfall bewirkt. Dadurch steigt die Last auf den Antrieb der beteiligten Druckerzeuger und deren Förderleistung sinkt. Letztlich verschlechtert sich dadurch die Druckaufbaudynamik des Bremssystems. Als Gegenmaßnahme ist es bekannt hydraulische Widerstände mit durchflussabhängig verstellbaren Drosselquerschnitten einzusetzen. Große Volumenströme vergrößern den

Drosselquerschnitt solcher Widerstände und reduzieren den Druckabfall. Derartige hydraulische Widerstände lassen sich z.B. als Ventileinrichtungen darstellen, deren Ventilglied einen vom Durchfluss bzw. von den vorliegenden Druckverhältnissen abhängigen Hub ausführen.

### Stand der Technik

Die WO91/04181 A1 offenbart eine Ventileinrichtung nach den Merkmalen des Oberbegriffs des Anspruchs 1. Insbesondere weist diese Ventileinrichtung ein Ventilglied auf, das mit strömungslenkenden Mitteln in Gestalt wenigstens einer vom Druckmittel durchströmbaren Nut versehen ist. Im umströmten Zustand des Ventilglieds bewirkt diese Nut eine das Ventilglied beaufschlagende und quer zur Durchströmungsrichtung der Ventileinrichtung wirkende Querkraft (Q).

Aus der DE 40 28 941 A1 ist des Weiteren eine Ventileinrichtung bekannt, die als Auslassventil bei einer Hubkolbenpumpe eines Fahrzeugbremssystems eingesetzt ist und die einen Ventilkörper (Pumpenzylinder) mit einem daran ausgebildeten Drosselquerschnitt sowie ein den Drosselquerschnitt regelndes Ventilglied umfasst. Das Ventilglied wird von einer Rückstellfeder gegen einen den Drosselquerschnitt umgebenden Ventilsitz gepresst und verschließt diesen, sofern die mechanische Kraft der Rückstellfeder auf das Ventilglied größer ist, als die öffnend wirkenden hydraulischen Kräfte aus der Druckmittelförderung. Bei Hydraulikkräften, die höher sind als die mechanischen Rückstellkräfte, führt das Ventilglied einen von der Kraftdifferenz abhängigen Hub aus, hebt vom Ventilsitz ab und gibt einen Steuerquerschnitt frei, durch welchen hindurch Druckmittel am Ventilglied vorbei zu einem Abfluss der Ventileinrichtung abfließt.

In Durchströmungsrichtung der bekannten Ventileinrichtung betrachtet, ist dieser Abfluss seitlich am Ventilkörper angeordnet, so dass das abströmende Druckmittel im Ventilkörper umgelenkt wird. Aufgrund dieser Umlenkung des Druckmittels wirken auf das Ventilglied strömungsbedingte Radial- bzw. Querkräfte ein. Die Öffnungsbewegung des Ventilglieds gleicht folglich einer Kippbewegung, wobei sich das Ventilglied weg von der Mündung des Abfluss in den Ventilkörpers bewegt und sich ggf. an dem, dem Abfluss gegenüberliegenden Bereich der Wandung des Ventilkörpers anlegt. Die Querkräfte auf das Ventilglied verhindern, dass ausschließlich zentrierende Kräfte auf das Ventilglied einwirken, durch welche das Ventilglied zu Geräusch erzeugenden Axialschwingungen angeregt wird.

Nachteilig ist, dass eine Ventileinrichtung mit seitlich angeordnetem Abfluss aufwändiger in der Herstellung ist und aufgrund der Druckmittelumlenkung empfindlicher auf Schwankungen der Viskosität des Druckmittels reagiert und damit breiter streuende Drosseleigenschaften aufweist als Ventileinrichtungen, bei denen sich Zulauf und Ablauf axial gegenüberliegen.

### Aufgabe der Erfindung

Der Erfindung liegt demnach die Aufgabe zugrunde, eine weiter geräuschverbesserte Ventileinrichtung bzw. eine Dämpfungseinrichtung anzugeben, die zudem hinsichtlich ihrer Drosseleigenschaften weiter verbessert ist.

Eine erfindungsgemäß ausgebildete Ventileinrichtung ist axial von Druckmittel durchströmbar und weist eine verbesserte Drosselwirkung auf, indem sich mit einem zunehmendem Volumenstrom durch die Ventileinrichtung der Druckabfall am Ventilsitz und folglich die Belastung des Antriebsmotors der Druckerzeuger einer schlupfregelbaren Hydraulikbremsanlage eines Kraftfahrzeugs reduziert. Dadurch sind die Drosseleigenschaften einer erfindungsgemäßen Ventileinrichtung weniger von Schwankungen der Viskosität des Druckmittels abhängig und erlauben somit eine über die Betriebsbedingungen exaktere Regelung des Bremsdrucks einer Fahrzeugbremsanlage. Die erfindungsgemäßen Maßnahmen erfordern keine zusätzlichen Bauteile, sind damit hinsichtlich des Montageaufwands der Ventileinrichtung kostenneutral umsetzbar und erlauben zudem eine einfachere Anpassung der Drosseleigenschaften der Ventileinrichtung an den jeweiligen Einsatzfall, beispielsweise durch einen einfach durchführbaren Austausch des Ventilglieds.

Weitere Vorteile oder vorteilhafte Weiterbildungen der Erfindungen ergeben sich jeweils aus den abhängigen Unteransprüchen und / oder aus der nachfolgenden Beschreibung.

Die abhängigen Unteransprüche betreffen Ausgestaltungsmöglichkeiten der Erfindung, die fertigungstechnisch besonders einfach und kostengünstig an ohnehin vorhandenen Bauteilen einer Ventileinrichtung umsetzbar sind.

### Zeichnung

Ein Ausführungsbeispiel der Erfindung ist in der Zeichnung dargestellt und wird in der nachfolgenden Beschreibung detailliert erläutert.

Es zeigen:
Figur 1: die schematische Darstellung eines ersten Ausführungsbeispiels einer der Erfindung zugrundeliegenden Ventileinrichtung im Längsschnitt;
Figur 2: ein zweites Beispiel einer weitergebildeten erfindungsgemäßen Ventileinrichtung, ebenfalls im Längsschnitt;
Figur 3: den Querschnitt eines Details entlang der Schnittlinie III-III nach Figur 2;
Figur 4: ein Diagramm von Drosselkennlinien einer erfindungsgemäßen Ventileinrichtung nach Figur 1 und nach Figur 2 im Vergleich und

Fugur 5: den schematischen Aufbau einer Dämpfungseinrichtung anhand von Schaltsymbolen.

### Offenbarung der Erfindung

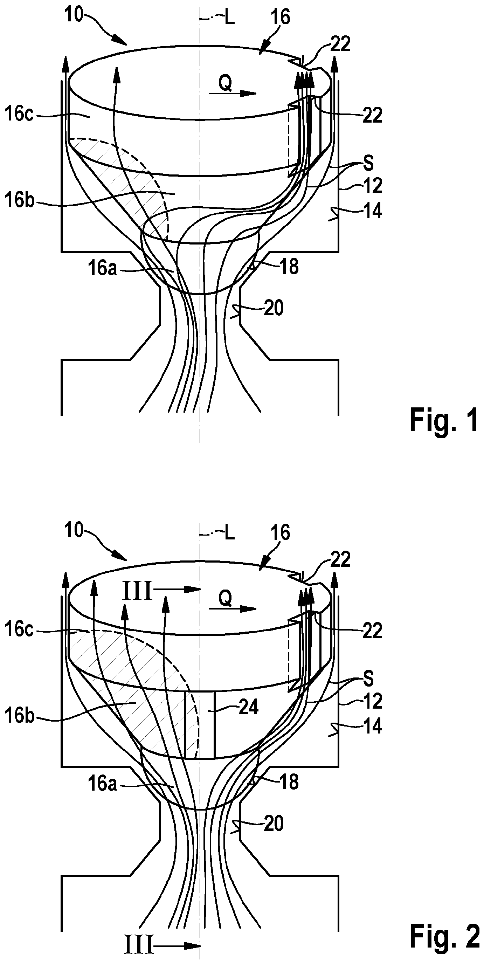

Die in der Figur 1 dargestellte Ventileinrichtung 10 besteht aus einem Ventilkörper 12 mit einer daran ausgebildeten Ventilbohrung 14 und einem Ventilglied 16, welches in dieser Ventilbohrung 14 axial verschiebbar aufgenommen ist. Die Ventilbohrung 14 ist in ihrem Innendurchmesser einmal nach innen abgesetzt und bildet einen Ventilsitz 18 aus, welcher einen Drosselquerschnitt 20 umschließt. Dieser Ventilsitz 18 ist beispielhaft als Innenkonus ausgeformt, könnte gleichfalls aber auch rechtwinklig oder abgerundet ausgeführt sein.

Wie anhand der eingezeichneten Strömungspfeile S veranschaulicht ist, strömt das Druckmittel gemäß der Darstellung in Figur 1 von unten nach oben durch den Drosselquerschnitt 20 hindurch. Demnach ist das Ventilglied 16 stromabwärts des Drosselquerschnitts 20 in der Ventilbohrung 14 angeordnet.
Im dargestellten, durchströmten Zustand der Ventileinrichtung 10 ist das Ventilglied 16 vom Drosselquerschnitt 20 abgehoben, so dass das Ventilglied 16 vom Druckmittel vollumfänglich umströmt wird. Ein Ablauf der Ventileinrichtung 10 ist nicht eingezeichnet, es ist jedoch davon auszugehen, dass ein solcher vorgesehen und bevorzugt koaxial zu einer Längsachse L der Ventilbohrung 14 angeordnet ist.

Ebenfalls nicht dargestellt ist ein elastisches Rückstellelement, welches das Ventilglied 16 mit einer, den hydraulischen Strömungskräften entgegen wirkenden, mechanischen Rückstellkraft beaufschlagt. Der vom Ventilglied 16 absolvierte Hub hängt somit von Druckverhältnissen bzw. dem pro Zeiteinheit durch den Drosselquerschnitt 20 hindurch strömenden Druckmittelvolumen ab.

Im gesperrten Zustand der Ventileinrichtung 10 liegt das Ventilglied 16 auf dem Ventilsitz 18 auf und sperrt den Drosselquerschnitt 20 ab.

Das Ventilglied 16 ist dazu in mehrere Abschnitte gegliedert. Ein erster Abschnitt 16a ist dem Ventilsitz 18 zugewandt und ist von einem zapfenförmigen Fortsatz gebildet, dessen sphärisch gekrümmtes Ende mit dem Ventilsitz zusammenwirkt. Im Bereich dieses Fortsatzes hat das Ventilglied 16 seinen insgesamt kleinsten Außendurchmesser.

An den ersten Abschnitt 16a schließt sich in Durchströmungsrichtung der Ventileinrichtung 10 ein konisch ausgebildeter Übergangsabschnitt 16b des Ventilglieds 16 an. Letzterer geht in einen dritten, zylindrisch geformten Abschnitt 16c über, an dem das Ventilglied 16 seinen maximalen Außendurchmesser aufweist. Mit dem zylindrischen Abschnitt 16c ist das Ventilglied 16 axialbeweglich in der Ventilbohrung 14 geführt, wobei zwischen dem zylindrischen Abschnitt 16c und der Wandung der Ventilbohrung 14 ein Spalt verbleibt, durch den Druckmittel bei geöffnetem Ventilsitz 18 am Ventilglied 16 vorbei strömt.

Erfindungsgemäß ist das Ventilglied 16 mit strömungslenkenden Mitteln 22 versehen. Diese strömungslenkenden Mittel 22 sind asymmetrisch über den Umfang des Ventilglieds 16 verteilt angeordnet, wodurch das Ventilglied 16 selbst einen asymmetrischen Querschnitt aufweist. Die strömungslenkenden Mittel 22 sind in Gestalt von Ausnehmungen ausgeführt und bevorzugt einteilig mit dem Ventilglied 16 ausgebildet. Die Ausnehmungen sind beispielsweise kostengünstig als Nuten 22 ausgeführt, welche am Umfang des zylindrischen Abschnitts 16c des Ventilglieds 16 ausgebildet sind.

Sämtliche strömungslenkenden Mittel 22 sind nur über einen begrenzten Umfangsabschnitt des Ventilglieds 16 verteilt angeordnet. Sie erstrecken sich axial, das heißt in Durchströmungsrichtung der Ventileinrichtung 10. Das Druckmittel strömt somit durch die Nuten 22 hindurch am Ventilglied 16 vorbei.

Zusätzlich zu dem mit Strömungslenkenden Mitteln 22 versehenen Umfangsabschnitt ist am Ventilglied 16 wenigstens ein zweiter Umfangsabschnitt vorgesehen, an dem keine derartigen strömungslenkenden Mittel 22 ausgebildet sind. Die beiden Umfangsabschnitte können gleich oder unterschiedlich große Anteile am Gesamtumfang des Ventilglieds 16 einnehmen.

Querschnittsform und/oder Anzahl der ausgebildeten Nuten 22 sind anwendungsspezifisch wählbar. Beispielsweise können die Nuten 22 mit Rechteckquerschnitt oder mit rinnenförmig ausgerundetem Querschnitt oder als Kerben ausgeführt sein. Die Tiefe der Nuten 22 ist ebenfals flexibel festlegbar. Zur Herstellung der Nuten 22 können spanabhebende oder spanlose bzw. umformende Herstellverfahren gleichermaßen eingesetzt werden.

Aufgrund der Nuten 22 übt der erste Umfangsabschnitt des Ventilglieds 16 auf die Druckmittelströmung im zugeordneten Spaltabschnitt zwischen dem Außenumfang des Ventilglieds 16 und dem Innenumfang der Ventilbohrung 14 eine geringere Drosselwirkung aus, als der zweite Umfangsabschnitt, der ohne strömungslenkende Mittel 22 ausgeführt ist. In der Folge durchströmt das Druckmittel den ersten Umfangsabschnitt ungehinderter und damit mit einer höheren Strömungsgeschwindigkeit als den zweiten Umfangsabschnitt. Dies ist in Figur 1 anhand der in diesem ersten Umfangsabschnitt dichter gedrängten Strömungspfeile S erkennbar. Da eine höhere Strömungsgeschwindigkeit mit einem geringeren Druckabfall einhergeht, bewirkt die demgegenüber stärker gedrosselte Strömung im Bereich des zweiten Umfangsabschnitts des Ventilglieds 16 ein höheres Druckniveau im entsprechenden Spaltabschnitt und daraus resultierend eine in Richtung des ersten Umfangsabschnitts wirkende Querkraft Q auf das Ventilglied 16. Der vom höheren Druckniveau beaufschlagte Bereich des Ventilglieds 16 ist in der Figur schraffiert angedeutet. Der Betrag der bewirkten Querkraft Q auf das Ventilglied 16 ist von der Viskosität des Druckmittels und dem Volumenstrom, das heißt der strömenden Druckmittelmenge pro Zeiteinheit abhängig. Mit steigender Viskosität bzw. zunehmenden Volumenstrom steigt auch der Betrag der Querkraft Q und entsprechend umgekehrt. Je größer die auf das Ventilglied 16 einwirkende Querkraft Q ist, desto geringer ist die Gefahr, dass das Ventilglied 16 von zentrierenden bzw. in Durchströmungsrichtung der Ventileinrichtung 10 wirkenden Axialkräften zu Schwingungen angeregt wird, welche letztlich für eine Geräuschentwicklung verantwortlich sind. Generell hat eine hohe Querkraft Q auf das Ventilglied 16 demnach eine geräuschsenkende Wirkung.

Um ein durch die Druckunterschiede entlang des Umfangs des Ventilglieds 16 bedingtes Ausweichen der Strömung hin zum Umfangsabschnitt mit geringerem Strömungswiderstand (erster Umfangsabschnitt) einzuschränken, ist das Ventilglied 16 gemäß Figur 2 mit wenigstens einem weiteren strömungslenkenden Mittel in Gestalt eines flügelförmigen Vorsprungs 24 versehen. Dieser flügelförmige Vorsprung 24 ist am konisch geformten Übergangsabschnitt 16b des Ventilglieds 16 angeordnet, erstreckt sich in Durchströmungsrichtung der Ventileinrichtung 10 und schließt umfangseitig bündig mit dem Außendurchmesser des zylindrischen Abschnitts 16c des Ventilglieds 16 ab.

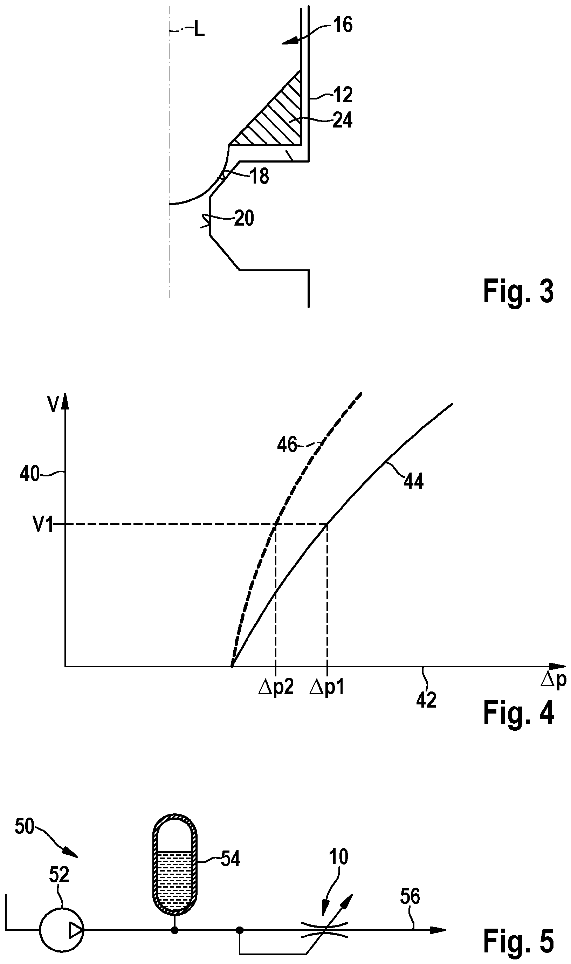

Wie anhand von Figur 3 ersichtlich, ist der flügelförmige Vorsprung 24 mit seiner Außenkontur an die Innenkontur der Ventilbohrung 14 im Bereich des Übergangs der Ventilbohrung 14 zum Drosselquerschnitt 20 angepasst. Im vorliegenden Fall weist der flügelförmige Vorsprung 24 zwei gerade Außenflanken auf, die miteinander einen rechten Winkel einschließen. In Umfangsrichtung des Ventilglieds 16 betrachtet, befindet sich der flügelförmige Vorsprung 24 an einem Übergangsbereich des mit Nuten 22 versehenen ersten Umfangsabschnitts des Ventilglieds 16 zum strömungslenkmittelfreien zweiten Umfangsabschnitt.

Der flügelförmige Vorsprung 24 trägt dazu bei, den Volumenstrom entlang des Ventilglieds 16 zu vergleichmäßigen, indem er eine Querströmung innerhalb der Ventileinrichtung 10 behindert, durch welche Druckmittel vom zweiten, von strömungslenkenden Mitteln 22 22, 24 freien Umfangsabschnitt zum ersten, mit strömungslenkenden Mittel 22 behafteten Umfangsabschnitt aufgrund des dort vorherrschenden geringeren Druckniveaus überströmt. Anders ausgedrückt, drosselt der flügelförmige Vorsprung 24 einen Druckausgleich zwischen den verschiedenen Umfangsabschnitten des Ventilglieds 16 und vergrößert im Vergleich zu einem konventionellen Ventilglied 16, das ohne derartige strömungslenkende Mittel 22 auskommt, die sich einstellende Druckdifferenz. Letztlich resultiert dies in einer größeren, das Ventilglied 16 beaufschlagenden Querkraft Q. Die mit dem höheren Druckniveau beaufschlagte schraffierte Fläche des Ventilglieds 16 ist größer als bei Figur 1.

Darüber hinaus ist die sich einstellende Querkraft Q auf das Ventilglied 16 durch die Wahl der Breite bzw. Dicke des flügelförmigen Vorsprungs 24 beeinflussbar. Mit zunehmender Dicke erhöht sich deren Drosselwirkung auf den vom zweiten zum ersten Umfangsabschnitt übertretenden Druckmittelstrom. Weniger Druckmittelübertritt wirkt sich demnach druckerhöhend im zweiten, von strömungslenkenden Mittel 22 freien Umfangsabschnitt des Ventilglieds 16 aus bzw. vergrößert die Druckdifferenz zwischen den verschiedenen Umfangsabschnitten des Ventilglieds 16.

Hinzuweisen ist ferner auf den Einfluss der strömungslenkenden Mittel 22 auf den Ventilhub. Aufgrund ihrer drosselnden Wirkungen und dem dadurch insgesamt höheren Druckniveau im Spalt um das Ventilglied 16, erhöht sich auch die öffnend wirkende Axialkraft auf das Ventilglied 16. Dies bedeutet, dass ein mit strömungslenkenden Mitteln 22 versehenes Ventilglied 16 gegenüber einem konventionellen Ventilglied 16, bei gleich großem Volumenstrom durch den Drosselquerschnitt 20, einen relativ größeren Ventilhub ausführt. Die Entfernung des Ventilglieds 16 zum Ventilsitz 18 nimmt also zu und der sich am Ventilsitz 18 auftretende Druckabfall fällt geringer aus. Letzteres wiederum wirkt sich positiv auf die Druckaufbaudynamik einer erfindungsgemäßen Ventileinrichtung 10 aus, indem diese schneller auf Druckänderungen zu reagieren vermag.

Figur 4 zeigt die jeweiligen Drosselkennlinien einer Ventileinrichtung 10, die entweder mit einem Ventilglied 16 nach Figur 1 oder mit einem Ventilglied 16 nach Figur 2 ausgestattet ist, im unmittelbaren Vergleich.

Im dargestellten Diagramm ist der Druckmitteldruckmitteldurchsatz V pro Zeiteinheit auf der Vertikalachse 40 aufgetragen und eine zwischen einem Zulauf und einem Ablauf der Ventileinrichtung 10 messbare Druckdifferenz auf der Horizontalachse 42. Die durchgezogene Drosselkennlinie 44 ist einer Ventileinrichtung 10 zugeordnet, die mit einem nach Figur 1 ausgestalteten Ventilglied 16 ausgestattet ist, das heißt einem Ventilglied 16, das strömungslenkende Mittel lediglich in Gestalt von Nuten 22, also keinen flügelförmigen Vorsprung 24 aufweist. Die gestrichelt eingezeichnete Drosselkennlinie 46 ist demgegenüber mit einem Ventilglied 16 aufgenommen, das druckmittelführende Nuten 22 in Kombination mit wenigstens einem flügelförmigen Vorsprung 24 aufweist, das also gemäß Figur 2 ausgebildet ist. Die Drosselkennlinie 44 des Ventilglieds 16 nach Figur 1 verläuft erkennbar flacher als diejenige des Ventilglieds 16 nach Figur 2. Dies bedeutet, dass das Ventilglied 16 nach Figur 1 bei einem vorgegebenen Druckmitteldurchsatz V1 eine relativ höhere Druckdifferenz Δp₁ bewirkt als das Ventilglied 16 nach Figur 2; Δp₂. Daraus folgt, dass das Ventilglied 16 nach Figur 1 auf die Druckmittelströmung eine stärkere drosselnde Wirkung ausübt, als das Ventilglied 16 nach Figur 2. Für eine möglichst hohe Druckstelldynamik ist deshalb der Einsatz eines gemäß Figur 2 ausgebildeten Ventilglieds 16 zu empfehlen.

Figur 5 zeigt schließlich den prinzipiellen Aufbau einer Dämpfungseinrichtung 50, insbesondere zur Dämpfung von Druckpulsationen in einem Bremskreis einer schlupfregelbaren Hydraulikbremsanlage eines Kraftfahrzeugs, anhand von Schaltsymbolen. Die Dämpfungseinrichtung 50 ist an einen Druckanschluss einer den Bremskreis mit Bremsdruck versorgenden Kolbenpumpe 52 angeschlossen und umfasst eine wie oben beschrieben ausgebildete Ventileinrichtung 10 und einen stromaufwärts dieser Ventileinrichtung 10 angeordneten Druckmittelspeicher 54. Der Druckmittelspeicher 54 hat ein veränderliches Druckmittelspeichervolumen und weist dazu in seinem Inneren ein elastisches und/oder ein von einer Speicherfeder beaufschlagtes Trennelement auf. Dieses teilt den Innenraum in eine mit Druckmittel befüllte Druckmittelkammer und in eine mit Gas befüllte Speicherkammer. Diese die Speicherkammer kann mit der Atmosphäre verbunden sein. Die Ventileinrichtung 10 drosselt den Druckmittelabfluss aus der Druckmittelkammer des Druckmittelspeichers 54 in einen Druckmittel führenden Kanal 56 eines nicht weiter dargestellten Bremskreises einer Fahrzeugbremsanlage. Die Ventileinrichtung 10 ist aufgebaut, wie in Zusammenhang mit der Beschreibung der Figuren 1 bis 4 beschrieben und wird von dem im Kanal 56 vorherrschenden Druckniveau gesteuert bzw. hat eine druckabhängige Drosselwirkung. Aufgrund der zuvor beschriebenen Maßnahmen an dem in Figur 5 nicht erkennbaren Ventilglied der Ventileinrichtung 10 arbeitet die Dämpfungseinrichtung 50 besonders geräuscharm und erzeugt dabei kein im Fahrzeuginneraum eines Kraftfahrzeugs wahrnehmbares Betriebsgeräusch.

Selbstverständlich sind Änderungen oder Ergänzungen gegenüber dem erläuterten Ausführungsbeispiel der Erfindung denkbar, ohne vom Grundgedanken der Erfindung abzuweichen.

## Patentansprüche

1. Ventileinrichtung (10), insbesondere zur Drosselung einer Druckmittelströmung in einem Druckmittel führenden Kanal,
mit einem Ventilkörper (12), der einen von einem Ventilsitz (18) umgebenen Drosselquerschnitt (20) ausbildet und
mit einem beweglich im Ventilkörper (12) aufgenommenen und den Drosselquerschnitt (20) in Abhängigkeit der vorherrschenden Druckverhältnisse einstellenden Ventilglied (16), das von einem elastischen Rückstellelement entgegen der Durchströmungsrichtung der Ventileinrichtung (10) beaufschlagt ist,
wobei das Ventilglied (16) mit strömungslenkenden Mitteln (22) in Gestalt wenigstens einer vom Druckmittel durchströmbaren Nut (22) versehen ist,
die im umströmten Zustand des Ventilglieds (16), eine das Ventilglied (16) beaufschlagende und quer zur Durchströmungsrichtung der Ventileinrichtung (10) wirkende Querkraft (Q) bewirkt,
**gekennzeichnet durch,**
wenigstens einen vom Druckmittel umströmten flügelförmigen Vorsprung (24) am Ventilglied (16), welcher an einem Übergangsbereich von dem mit strömungslenkenden Mitteln (22) versehenen ersten Umfangsabschnitt des Ventilglieds (16) zu dem von strömungslenkenden Mitteln (22; 24) freien zweiten Umfangsabschnitt angeordnet ist.

2. Ventileinrichtung (10) nach Anspruch 1, **dadurch gekennzeichnet,**
**dass** der flügelförmige Vorsprung (24) einteilig mit dem Ventilglied (16) ausgebildet ist.

3. Ventileinrichtung (10) nach Anspruch 1 oder 2, **dadurch gekennzeichnet,**
**dass** der flügelförmige Vorsprung (24) an einem konisch ausgebildeten Abschnitt (16b) des Ventilglieds (16) ausgebildet und in Durchströmungsrichtung der Ventileinrichtung (10) ausgerichtet ist.

4. Ventileinrichtung (10) nach einem der Ansprüche 1 bis 3, **dadurch gekennzeichnet,**
**dass** der flügelförmige Vorsprung (24) und eine Innenwand des Ventilkörpers (12) in einem Bereich unmittelbar stromabwärts des Drosselquerschnitts (20) der Ventileinrichtung (10) in ihren jeweiligen Konturen aufeinander abgestimmt sind.

5. Ventileinrichtung (10) nach einem der Ansprüche 1 bis 4, **dadurch gekennzeichnet,**
**dass** die wenigstens eine Nut (22) am Umfang eines zylindrischen Abschnitts (16c) des Ventilglieds (16) ausgebildet ist und sich in Durchströmungsrichtung der Ventileinrichtung (10) erstreckt.

6. Dämpfungseinrichtung (50), insbesondere zur Dämpfung von Druckpulsationen in einem Bremskreis einer schlupfregelbaren Fahrzeugbremsanlage, mit einer Ventileinrichtung (10) zur Drosselung einer Druckmittelströmung in einem Druckmittel führenden Kanal (56) und einem der Ventileinrichtung (10) vorgeschalteten Druckmittelspeicher (54),
**dadurch gekennzeichnet,**
**dass** die Ventileinrichtung (10) ausgebildet ist nach einem oder mehreren der Ansprüche 1 bis 5.

## Claims

1. Valve device (10), in particular for throttling a pressure medium flow in a pressure medium-conducting channel,
having a valve body (12) which forms a throttle cross section (20) surrounded by a valve seat (18), and
having a valve member (16) which is movably accommodated in the valve body (12), and which sets the throttle cross section (20) in a manner dependent on the prevailing pressure conditions,
and which is loaded by an elastic restoring element counter to the throughflow direction of the valve device (10),
wherein the valve member (16) is provided with flow-directing means (22) in the form of at least one groove (22) which is able to be flowed through by the pressure medium,
said at least one groove, in the state of the valve member (16) in which the latter is flowed around, bringing about a transverse force (Q) which loads the valve member (16) and acts transversely to the throughflow direction of the valve device (10),
**characterized by**
at least one wing-like projection (24) on the valve member (16), which is flowed around by the pressure medium and is arranged on a transition region from the first peripheral portion, provided with flow-directing means (22), of the valve member (16) to the second peripheral portion, which is free of flow-directing means (22; 24) .

2. Valve device (10) according to Claim 1, **characterized**
**in that** the wing-like projection (24) is formed in one piece with the valve member (16).

3. Valve device (10) according to Claim 1 or 2, **characterized**
**in that** the wing-like projection (24) is formed on a conically formed portion (16b) of the valve member (16) and is oriented in the throughflow direction of the valve device (10).

4. Valve device (10) according to one of Claims 1 to 3, **characterized**
**in that** the wing-like projection (24) and an inner wall of the valve body (12) are, in terms of their respective contours, matched to one another in a region immediately downstream of the throttle cross section (20) of the valve device (10).

5. Valve device (10) according to one of Claims 1 to 4, **characterized**
**in that** the at least one groove (22) is formed on the periphery of a cylindrical portion (16c) of the valve member (16) and extends in the throughflow direction of the valve device (10).

6. Damping device (50), in particular for damping pressure pulsations in a brake circuit of a slip-controllable vehicle brake system, having a valve device (10) for throttling a pressure medium flow in a pressure medium-conducting channel (56), and having a pressure medium accumulator (54) which is arranged upstream of the valve device (10),
**characterized**
**in that** the valve device (10) is designed according to one of more of Claims 1 to 5.

## Revendications

1. Système de soupape (10), en particulier pour l'étranglement d'un écoulement de fluide sous pression dans un canal conduisant du fluide sous pression, comprenant
un corps de soupape (12) qui constitue une section transversale d'étranglement (20) entourée par un siège de soupape (18) et
un organe de soupape (16) reçu de manière déplaçable dans le corps de soupape (12) et ajustant la section transversale d'étranglement (20) en fonction des rapports de pression existants, lequel est sollicité par un élément de rappel élastique à l'encontre de la direction d'écoulement du système de soupape (10),
l'organe de soupape (16) étant pourvu de moyens (22) de guidage de l'écoulement, sous la forme d'au moins une rainure (22) pouvant être parcourue par le fluide sous pression, laquelle, dans l'état non parcouru par l'écoulement de l'organe de soupape (16), provoque une force transversale (Q) sollicitant l'organe de soupape (16) et agissant transversalement à la direction d'écoulement du système de soupape (10),
**caractérisé par**
au moins une partie saillante en forme d'aile (24) au niveau de l'organe de soupape (16), non parcourue par l'écoulement de fluide sous pression, laquelle est disposée au niveau d'une région de transition de la première portion périphérique de l'organe de soupape (16) pourvue des moyens (22) de guidage de l'écoulement à la deuxième portion périphérique exempte de moyens (22 ; 24) de guidage de l'écoulement.

2. Système de soupape (10) selon la revendication 1, **caractérisé en ce que**
la partie saillante en forme d'aile (24) est réalisée d'une seule pièce avec l'organe de soupape (16).

3. Système de soupape (10) selon la revendication 1 ou 2, **caractérisé en ce que**
la partie saillante en forme d'aile (24) est réalisée au niveau d'une portion (16b) réalisée sous forme conique de l'organe de soupape (16) et est orientée dans la direction d'écoulement du système de soupape (10).

4. Système de soupape (10) selon l'une quelconque des revendications 1 à 3, **caractérisé en ce que**
la partie saillante en forme d'aile (24) et une paroi intérieure du corps de soupape (12) dans une région immédiatement en aval de la section transversale d'étranglement (20) du système de soupape (10) sont ajustées l'une à l'autre en termes de leurs contours respectifs.

5. Système de soupape (10) selon l'une quelconque des revendications 1 à 4, **caractérisé en ce que**
l'au moins une rainure (22) est réalisée au niveau de la périphérie d'une portion cylindrique (16c) de l'organe de soupape (16) et s'étend dans la direction d'écoulement du système de soupape (10).

6. Système d'amortissement (50), en particulier pour l'amortissement d'impulsions de pression dans un circuit de freinage d'une installation de freinage de véhicule à contrôle de patinage, comprenant un système de soupape (10) pour l'étranglement d'un écoulement de fluide sous pression dans un canal (56) conduisant un fluide sous pression, et un réservoir de fluide sous pression (54) monté en amont du système de soupape (10),
**caractérisé en ce que**
le système de soupape est réalisé selon l'une quelconque ou plusieurs des revendications 1 à 5.
